# EUROPEAN PATENT APPLICATION

(11) **EP 4 650 122 A1**
(43) Date of publication of application: **19.11.2025**
(21) Application number: 24918941.6
(22) Date of filing: 22.10.2024
(51) Int. Cl.: B25J 11/00, B25J 9/16, B25J 5/02, B25J 13/08, B25J 15/00, B25J 19/02, C10B 25/16

(54) **APPARATUS AND METHOD FOR SEALING COKE OVEN DOOR**

(30) Priority: 18.01.2024 KR 20240007959
(71) Applicant: POSCO Co., Ltd, Pohang-si, Gyeongsangbuk-do 37859 (KR)
(72) Inventor: WON, Sung-Yeun, Pohang-si, Gyeongsangbuk-do 37877 (KR); LIM, Seung-Ho, Pohang-si, Gyeongsangbuk-do 37877 (KR); KIM, Hyun-Hee, Pohang-si, Gyeongsangbuk-do 37877 (KR); AN, Seong-Han, Pohang-si, Gyeongsangbuk-do 37838 (KR); KIM, Ki-Hwan, Pohang-si, Gyeongsangbuk-do 37877 (KR)
(74) Representative: Meissner Bolte Partnerschaft mbB
(86) International application number: PCT/KR2024/016098
(87) International publication number: WO 2025/154907

(57) **Abstract**

The present invention provides an apparatus and a method for sealing a coke oven door in order to prevent gas leakage. Provided in one embodiment is the apparatus for sealing a coke oven door, comprising: a sealing material supply unit including a nozzle for discharging a sealing material; a robot which is connected to the sealing material supply unit, and which includes a robot arm for moving the position of the nozzle and a base for supporting the robot arm; a moving unit for moving the robot in the horizontal direction in which a plurality of coke ovens are arranged, and in the vertical direction which is the longitudinal direction of the plurality of coke ovens; and a control unit for controlling the robot arm.

## Description

### Technical Field

The present disclosure relates to a device and a method for sealing a coke oven door.

### Background Art

A coke oven may be a facility having a plurality of carbonization chambers for loading coal, and producing red-hot coke by removing impurities by applying high-temperature heat to the coal loaded in the carbonization chamber for a predetermined period of time. Coke may be a type of fuel having a high carbon content and trace impurities, and may usually use coal as a raw material. Coke produced from coal may be gray in color and may have hard and porous properties.

In the process of manufacturing coke, fuel coal may be supplied into a carbonization chamber through an inlet in an upper portion of each of carbonization chambers, and the red-hot coke having gone through dry distillation may be loaded to a digester through a region in which a door is open and may be transported to a process position.

A coke oven may include a door for coal inflow and coke discharge, and each door may operate by a desorption device to open or close a corresponding carbonization chamber.

During the red-hot coke drying process, a coke oven gas (COG, coke oven gas), which is impurities including gaseous components, may be generated in the generated carbonization chamber. The gas should not leak externally through the door, but since the internal region of the carbonization chamber is a high-temperature and highpressure environment, gas may leakage from an upper inlet, an extrusion-side door, or a coke-side door.

In particular, a large amount of foreign substances (such as tar and carbon) generated during the coke production process may be deposited on the surface of the door and the door frame, and airtightness of the coke oven due to the deposited foreign substances may be damaged.

Accordingly, high-temperature gas may leak externally of the coke oven, and may cause damages and deformation of various facility, and there may be an issue of environmental pollution such as deterioration of air quality, and a worker may be exposed to the risk of accident such as burn, gas poisoning, fall, and entrapment.

Generally, a worker may ride a service car, may move directly to the gas leak region, and may seal the leak site.

(Cited document 1) KR 10-0417099 B1

### Detailed description of present disclosure

### Technical problems to solve

An aspect of the present disclosure is to provide a device and method for sealing coke oven door which may block and prevent gas leakage generated during a process of manufacturing coke.

An aspect of the present disclosure is to provide a device for sealing a coke oven door and a method for sealing a coke oven door may seal a coke oven tightly by controlling a robot arm to move along an edge of the oven door in which a nozzle may be positioned in an operation region using an edge tracking technology using a laser generator.

An aspect of the present disclosure is to provide a device for sealing a coke oven door and a method for sealing a coke oven door which may enable real-time monitoring of a sealing operation using a camera disposed on an end of a robot arm, and may enable entirely monitoring of an operation target region after the sealing operation is completed using a camera disposed at a base supporting the robot arm.

### Solution to Problem

An aspect of the present disclosure provides a device for sealing a coke oven door and a method for sealing a coke oven door as below.

According to an embodiment of the present disclosure, a device for sealing a coke oven door includes a sealing material supply unit including a nozzle discharging a sealing material; a robot connected to the sealing material supply unit and including a robot arm moving a position of the nozzle and a base supporting the robot arm; a moving unit moving the robot in a horizontal direction in which a plurality of coke ovens are arranged and a vertical direction which is a length direction of the plurality of coke ovens; and a control unit controlling the robot arm, wherein the control unit controls the robot arm such that the nozzle moves along an edge of an oven door of one of the plurality of coke ovens.

According to an embodiment of the present disclosure, a method for sealing a coke oven door includes an operation of moving a robot in a horizontal direction and a vertical direction; an operation of moving a nozzle by controlling a robot arm included in the robot; and an operation of discharging a sealing material from the nozzle, wherein the operation of moving the nozzle includes controlling the robot arm such that the nozzle moves along an edge of an oven door of one of a plurality of coke ovens.

According to an embodiment of the present disclosure, a device for sealing a coke oven door includes a sensing unit including one or more sensors and sensing whether gas leakage occurs with respect to a plurality of coke ovens; a sealing unit including a nozzle discharging a sealing material and a robot arm moving a position of the nozzle; a moving unit moving the sealing unit in a horizontal direction and a vertical direction, wherein the plurality of coke ovens are divided into a plurality of sealing regions, wherein the sensing unit detects an operation target region in which gas leakage occurs among the plurality of sealing regions, wherein the moving unit moves the sealing unit to the operation target region, and wherein the sealing unit controls the robot arm such that the nozzle moves along an edge of an oven door positioned within the operation target region.

### Advantageous Effects of Invention

According to an aspect of the present disclosure, a device and method for sealing a coke oven door which may block and prevent gas leakage generated in a process of manufacturing coke.

Also, according to an embodiment of the present disclosure, a device for sealing a coke oven door and a method for sealing a coke oven door may seal a coke oven tightly by controlling a robot arm to move along an edge of the oven door in which a nozzle may be positioned in an operation region using an edge tracking technology using a laser generator may be provided.

Also, according to an embodiment of the present disclosure, a device for sealing a coke oven door and a method for sealing a coke oven door which may enable real-time monitoring of a sealing operation using a camera disposed on an end of a robot arm, and may enable entirely monitoring of an operation target region after the sealing operation is completed using a camera disposed at a base supporting the robot arm may be provided.

### Brief Description of Drawings

FIG. 1 is a diagram illustrating components of a device for sealing a coke oven door according to an embodiment of the present disclosure.
FIG. 2A is a block diagram illustrating components of a device for sealing a coke oven door according to an embodiment of the present disclosure.
FIG. 2B is a diagram illustrating a portion of a device for sealing a coke oven door according to an embodiment of the present disclosure.
FIG. 3 is a diagram illustrating a plurality of sealing regions in a method for sealing a coke oven door according to an embodiment of the present disclosure.
FIG. 4A is a diagram illustrating an operation of a device for sealing a coke oven door according to an embodiment of the present disclosure.
FIG. 4B is a diagram illustrating an operation of a device for sealing a coke oven door according to an embodiment of the present disclosure.
FIG. 4C is a diagram illustrating an operation of a device for sealing a coke oven door according to an embodiment of the present disclosure.
FIG. 4D is a diagram illustrating an operation of a device for sealing a coke oven door according to an embodiment of the present disclosure.
FIG. 5 is a flowchart illustrating a method for sealing a coke oven door according to an embodiment of the present disclosure.
FIG. 6 is a diagram illustrating an entire system including a device for sealing a coke oven door according to an embodiment of the present disclosure.

### Best Mode for Invention

Hereinafter, a preferred embodiment may be described in detail such that a person having ordinary knowledge in the technical field to which the present disclosure belongs may easily practice the present disclosure with reference to the accompanied drawings. However, when describing a preferred embodiment of the present disclosure in detail, when it is determined that a specific description of a related known function or configuration may unnecessarily obscure the gist of the present disclosure, the detailed description may be omitted. Also, the same reference numerals may be used for parts performing similar functions and actions throughout the drawings. Also, in this specification, terms such as 'upper,' 'upper portion,' 'upper surface,' 'lower,' 'lower portion,' 'lower surface,' 'side surface,' or the like, may be based on the drawings, and in an actual sense, the terms may vary depending on the direction in which the elements or components are disposed.

Also, throughout the specification, when an element is mentioned as being "connected" to another component, this may mean that the element is directly connected to another component, and may also mean that the element is indirectly connected to another component with an intervening element therebetween. Also, it will be understood that when a portion "includes" an element, it may further include another element, not excluding another element, unless otherwise indicated.

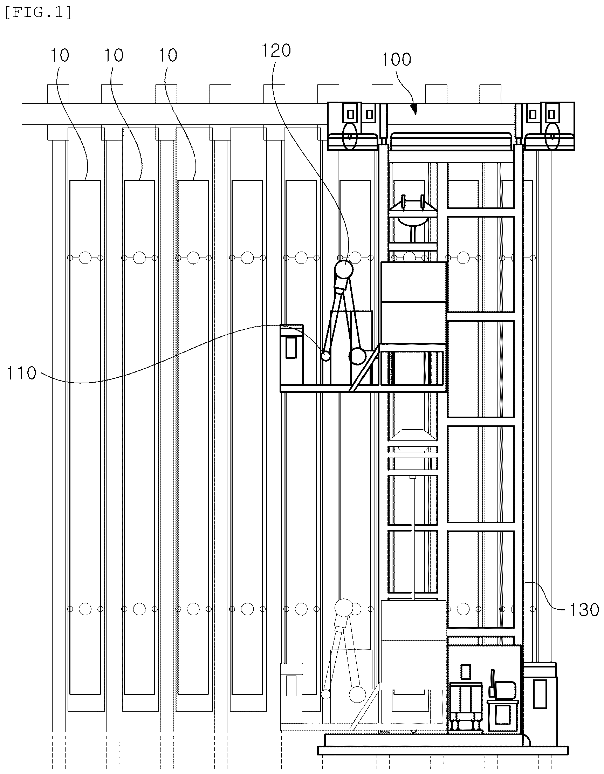

FIG. 1 is a diagram illustrating components of a device for sealing a coke oven door according to an embodiment of the present disclosure.

Referring to FIG. 1, the device 100 for sealing a coke oven door may be applied to a site in which a plurality of coke ovens 10 are disposed. The device 100 for sealing a coke oven door may prevent and block gas leakage by sealing a region in which gas leakage occurs in the plurality of coke ovens 10.

Gas leakage may occur in a gap between an oven door and an oven frame of the coke oven 10. Causes of gas leakage may include deterioration caused by long-term use of the oven door, shape deformation caused by physical collision due to opening and closing of the oven door, or gap widening caused by tar generated from coal fixed and cured between the oven door and the oven frame.

Generally, an operator riding in a service car directly may move to the gas leakage area and may perform an operation of sealing the gas leakage point. The present disclosure may provide a device and a method for blocking and preventing gas leakage occurring in a coke oven by using a robot without sending an operator to the site.

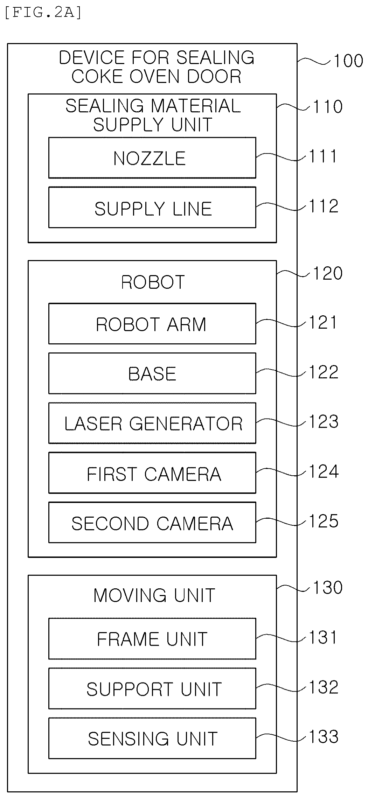

Referring to FIGS. 1 and 2A, the device 100 for sealing a coke oven door may include a sealing material supply unit 110, a robot 120, and a moving unit 130.

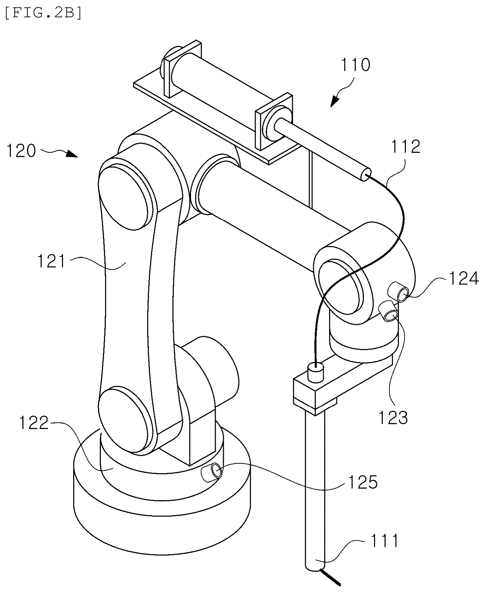

FIG. 2B is an enlarged diagram illustrating a sealing material supply unit 110 and a robot 120 of the device 100 for sealing a coke oven door according to an embodiment of the present disclosure. Hereinafter, the components of the device 100 for sealing a coke oven door may be described in detail with reference to FIGS. 1, 2A, and 2B together.

The sealing material supply unit 110 may include a nozzle 111 and a supply line 112.

The nozzle 111 may discharge a sealing material. The sealing material may be used to hermetically seal a gas leakage point of the coke oven. For example, the sealing material may be used to seal a region between the oven door and the frame of the coke oven.

The sealing material may be discharged from the nozzle 111 in a semi-solid state. The sealing material may include a thermosetting material having a semi-solid state at a specific temperature or lower and cured by high-temperature heat. For example, the sealing material may include one or more materials among ceramole and mortar.

The sealing material discharged from the nozzle 111 may be discharged by the heat generated in the coke oven, and may be cured, thereby sealing an edge of the oven door. The edge of the oven door may be sealed by the cured sealing material, thereby preventing gas leakage.

A supply line 112 may be connected to a nozzle 111 and may supply a sealing material to the nozzle 111.

The robot 120 may include a robot arm 121 and a base 122.

The robot arm 121 may be connected to the sealing material supply unit 110 and may support at least a portion of the sealing material supply unit 110.

For example, the robot arm 121 may support the supply line 112.

The robot arm 121 may move the position of the nozzle 111. The robot arm 121 may include, for example, one or more joints and the position and angle of the end may be freely adjusted.

The nozzle 111 through which the sealing material is discharged may be disposed adjacently to an end of the robot arm 121. Accordingly, the device 100 for sealing a coke oven door may move the position of the nozzle 111 by controlling coordinates of the end of the robot arm 121.

Specifically, the device 100 for sealing a coke oven door may further include a control unit controlling the robot arm 121. The control unit may control the robot arm 121 such that the nozzle 111 may move along the edge of one of the plurality of coke ovens 10 of the oven door.

The base 122 may be connected to the lower portion of the robot arm 121 and may support the robot arm 121.

The moving unit 130 may move the robot 120 using one or more motors.

The moving unit 130 may move the robot in a horizontal direction and a vertical direction. Here, the horizontal direction may be a direction in which the plurality of coke ovens 10 are arranged, and the vertical direction may be a length direction of the plurality of coke ovens 10.

The moving unit 130 may include a frame unit 131, a support unit 132, and a sensing unit 133. The support unit 132 may support the base 122 of the robot 120 from below, and may also be connected to the frame unit 131.

The frame unit 131 may move in the horizontal direction. The frame unit 131 may move the robot 120 in a wide-area by moving along the horizontal direction in which the plurality of coke ovens are arranged.

Accordingly, as the frame unit 131 moves in the horizontal direction, the support unit 132 connected to the frame unit 131 and the robot 120 disposed on the support unit 132 may move together in the horizontal direction.

The support unit 132 may move in the vertical direction along the length direction of the frame unit 131. As the support unit 132 moves in the vertical direction, the robot 120 disposed on the support unit 132 may move together in the vertical direction.

The sensing unit 133 may include one or more sensors. The sensing unit 133 may sense the positions of the frame unit 131 and the support unit 132 for the plurality of coke ovens 10.

The sensing unit 133 may recognize buckstays positioned on both sides of the oven door. The sensing unit 133 may derive the position in the horizontal direction of the frame unit 131 based on the number of buckstays recognized while the frame unit 131 moves in the horizontal direction.

For example, when the frame unit 131 stops moving after three buckstays are recognized by the sensing unit 133 while the frame unit 131 moves in the horizontal direction, the position in the horizontal direction of the frame unit 131 may be derived as the frame unit 131 is oriented toward the coke oven positioned at the third position from a reference position.

In another embodiment, the sensing unit 133 may recognize an identification code of each of the plurality of coke ovens 10. The sensing unit 133 may derive the position in the horizontal direction of the frame unit 131 based on the identification code of the recognized coke oven.

Also, the sensing unit 133 may derive the position in the vertical direction of the support unit 132 based on the length of the section in which the support unit 132 moves up and down.

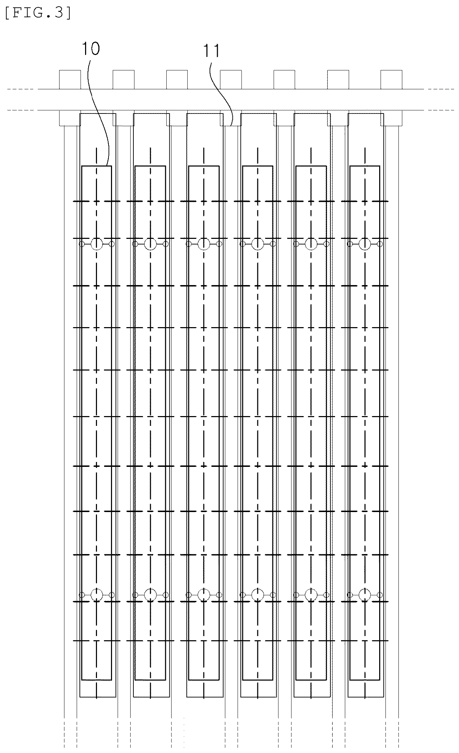

The plurality of coke ovens 10 may be divided into a plurality of sealing regions. For example, as illustrated in FIG. 3, the plurality of coke ovens 10 may be disposed along the horizontal direction with the buckstays 11 therebetween, and one surface of each coke oven 10 may be divided into a plurality of sealing regions.

The sealing region illustrated in FIG. 3 is merely an example, and the sealing region for one coke oven 10 may be divided into more or fewer sealing regions than the example illustrated in FIG. 3.

The moving unit 130 may move the robot 120 to the operation target region. The operation target region may indicate a region in which gas leakage occurs among a plurality of sealing regions. The operation target region may be determined by, for example, information about the oven door and information about a section of the corresponding oven door.

The moving unit 130 may move the robot 120 to the operation target region by, for example, moving the frame unit 131 in the horizontal direction and moving the support unit 132 in the vertical direction.

The robot 120 may move to the vicinity of the operation target region by the moving unit 130 and may perform a sealing operation for the operation target region.

Referring to FIG. 2B, the robot 120 may further include a laser generator 123 generating a laser beam. The laser generator 123 may be disposed, for example, on an end of the robot arm 121.

The device 100 for sealing a coke oven door according to the present disclosure may detect the edge of the oven door using edge tracking technology and vision finding technology using the laser generator 123.

Specifically, the control unit may detect the edge of the oven door positioned within the operation target region based on pre-stored shape information of the oven door and the shape recognized by the laser beam generated by the laser generator 123.

The control unit may control the nozzle 111 to perform a sealing operation of discharging the sealing material by moving along the edge of the oven door positioned within the operation target region.

Referring again to FIG. 2B, the robot 120 may further include a first camera 124 and a second camera 125.

The first camera 124 may be disposed, for example, at the end of the robot arm 121. The first camera 124 may obtain an image of a region including the vicinity of the end of the robot arm 121.

The control unit may monitor the progress of the sealing operation for the operation target region based on the image obtained by the first camera 124.

The second camera 125 may be disposed, for example, at the base 122. The second camera 125 may obtain an image of a region including the operation target region.

The control unit may monitor whether gas leakage occurs in the operation target region after the sealing operation for the operation target region is completed based on the image obtained by the second camera 125.

When the control unit determines that gas leakage occurs in the operation target region after the sealing operation for the operation target region is completed, the control unit may perform a resealing operation for the operation target region. The control unit may control the robot arm 121 to perform the resealing operation for the operation target region.

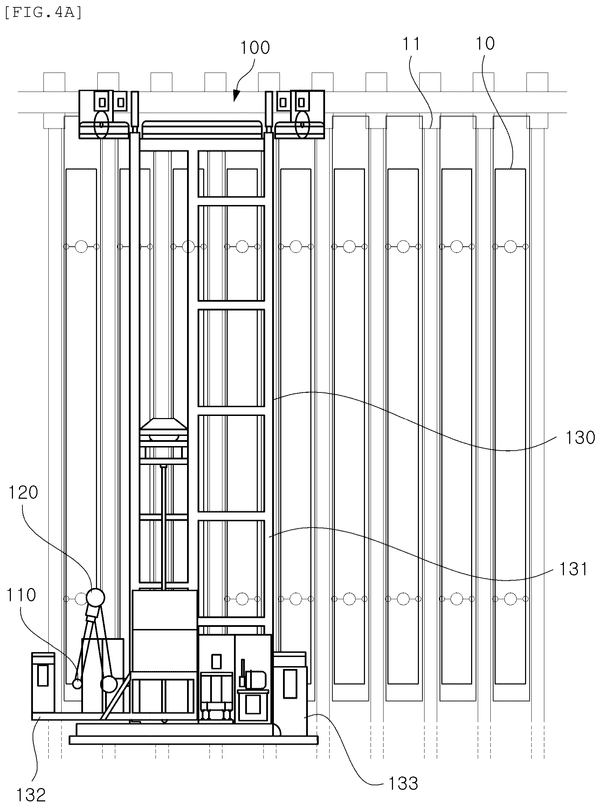

FIGS. 4A to 4D are diagrams illustrating an operation of a device for sealing a coke oven door according to an embodiment of the present disclosure. FIGS. 4A to 4D illustrate an operation in which the device 100 for sealing a coke oven door moves from a standby position and performs a sealing operation for the operation target region in sequence.

FIG. 4A is a diagram illustrating the example in which the device 100 for sealing a coke oven door is positioned in a standby position. In the standby position, the support unit 132 of the device 100 for sealing a coke oven door may move down.

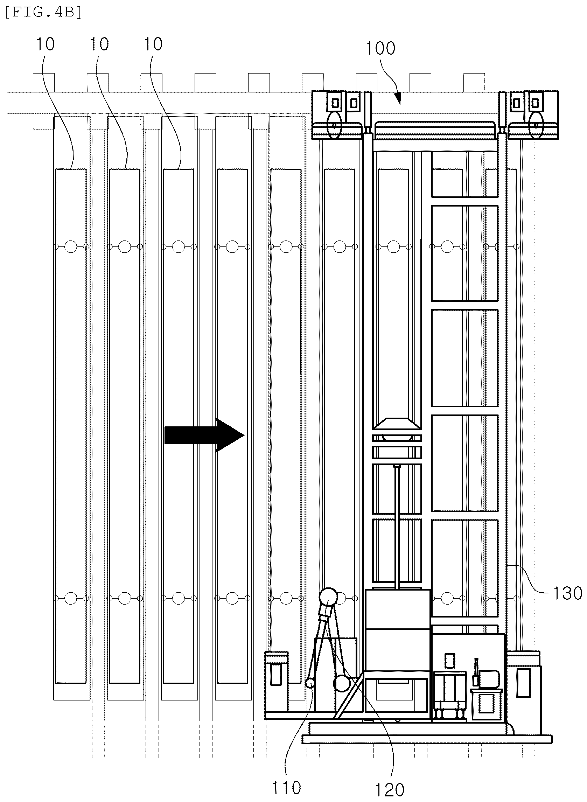

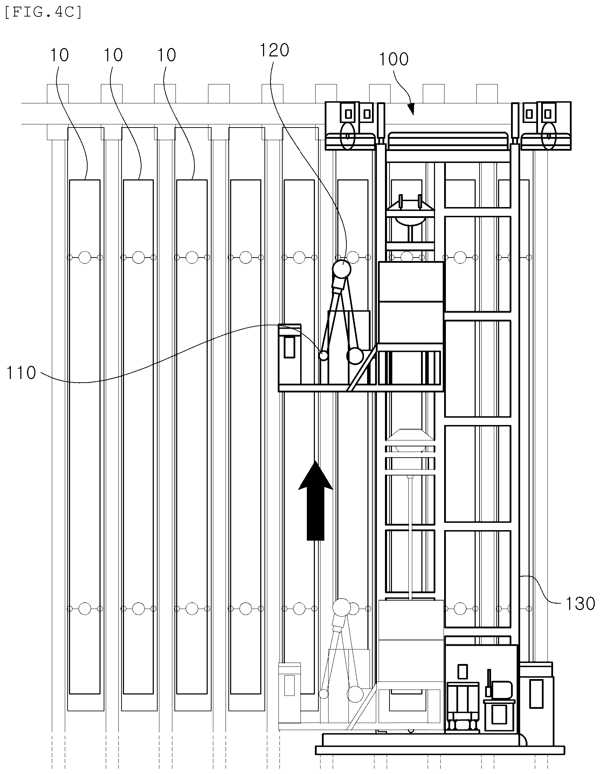

FIGS. 4B and 4C may illustrate the example in which the device 100 for sealing a coke oven door moves to an operation target region.

As illustrated in FIG. 4B, the frame unit 131 of the device 100 for sealing a coke oven door may move in a horizontal direction, such that the robot 120 may move in a wide-area in a horizontal direction.

Thereafter, as illustrated in FIG. 4C, the support unit 132 of the device 100 for sealing a coke oven door may move in a vertical direction, such that the robot 120 may move in a vertical direction. The device 100 for sealing a coke oven door may move the robot 120 to the operation target region by moving in the horizontal direction and the vertical direction.

After the robot 120 moves to the operation target region, the device 100 for sealing a coke oven door may perform a sealing operation for the operation target region.

Specifically, the device 100 for sealing a coke oven door may control the robot arm 121 such that the nozzle 111 may move along the edge of the oven door positioned within the operation target region. The nozzle 111 may discharge the sealing material while moving along the edge of the oven door positioned within the operation target region.

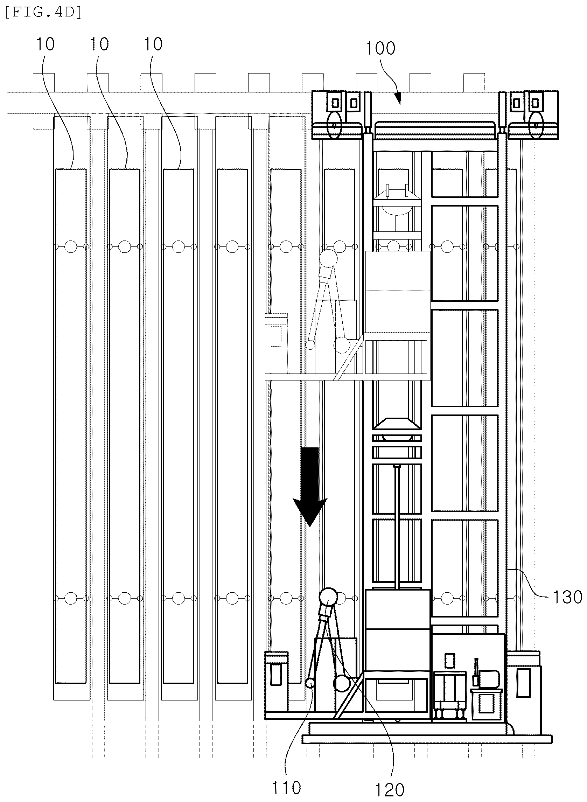

After the device 100 for sealing a coke oven door completes the sealing operation for the operation target region, the support unit 132 of the device 100 for sealing a coke oven door may move down in the vertical direction as illustrated in FIG. 4D.

In a state in which the support unit 132 moves down, the device 100 for sealing a coke oven door may move back to the standby position illustrated in FIG. 4A by horizontally moving the frame unit 131.

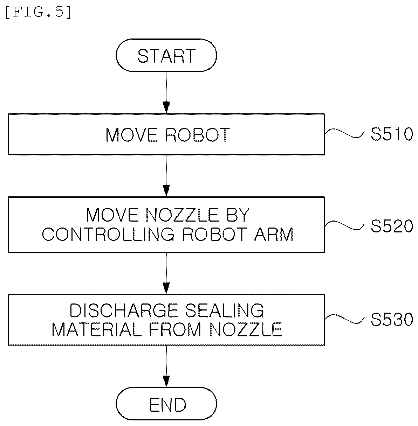

FIG. 5 is a flowchart illustrating a method for sealing a coke oven door according to an embodiment of the present disclosure. As illustrated in FIG. 5, a method 500 for sealing a coke oven door may include an operation (S510) of moving a robot, an operation (S520) of moving a nozzle by controlling a robot arm, and an operation (S530) of discharging a sealing material from the nozzle.

In the operation (S510) of moving the robot, the robot may move in the horizontal direction and the vertical direction. Here, the horizontal direction is the direction in which the plurality of coke ovens are arranged, and the vertical direction may represent the length direction of the plurality of coke ovens.

Specifically, the operation (S510) of moving the robot may include an operation of moving the robot in the horizontal direction and an operation of moving the robot in the vertical direction.

In an embodiment, the operation (S510) of moving the robot may sequentially perform the operation of moving the robot in the horizontal direction and the operation of moving the robot in the vertical direction.

The operation of moving the robot in the horizontal direction may include an operation of recognizing buckstays positioned on both sides of the oven door and an operation of deriving the position in the horizontal direction of the robot based on the number of backstays.

In operation (S510) of moving the robot, the robot may move to an operation target region by moving in the horizontal direction and the vertical direction. The operation target region may indicate a region in which gas leakage occurs among the plurality of sealing regions.

In operation (S520) of moving the nozzle, the nozzle may discharge a sealing material. The sealing material may include a thermosetting material cured by high-temperature heat.

The nozzle may be connected to at least a portion of the robot arm, and the position may move by the robot arm. In operation (S520) of moving the nozzle, the robot arm may be controlled such that the nozzle may move along the edge of an oven door of one of the plurality of coke ovens.

The operation (S520) of moving the nozzle may include an operation of recognizing a shape using a laser generator and an operation of detecting an edge of an oven door.

The laser generator may be disposed on an end of a robot arm. In the operation of detecting an edge of an oven door, an edge of an oven door positioned within an operation target region may be detected based on pre-stored shape information of the oven door and a shape recognized by the laser generator.

At least a portion of the edge of the oven door may be hermetically sealed by the operation (S530) of discharging a sealing material from the nozzle.

The method 500 for sealing a coke oven door may further include an operation of supplying the sealing material to the nozzle through a supply line supported by a robot arm.

Additionally, the method 500 for sealing a coke oven door may further include an operation of obtaining a first image by a first camera disposed on the end of the robot arm and an operation of monitoring the progress of the sealing operation for the operation target region based on a first image.

The first image obtained by the first camera may be an image of a region including a vicinity of the end of the robot arm.

Also the method 500 for sealing a coke oven door may further include an operation of obtaining a second image by a second camera disposed at a base supporting the robot arm and an operation of monitoring whether gas leakage occurs in the operation target region after the sealing operation for the operation target region is completed based on a second image.

The second image obtained by the second camera may be an image of a region including the operation target region.

The method 500 for sealing a coke oven door may further include an operation for performing a resealing operation for the operation target region when it is determined that gas leakage occurs in the operation target region after the sealing operation for the operation target region is completed.

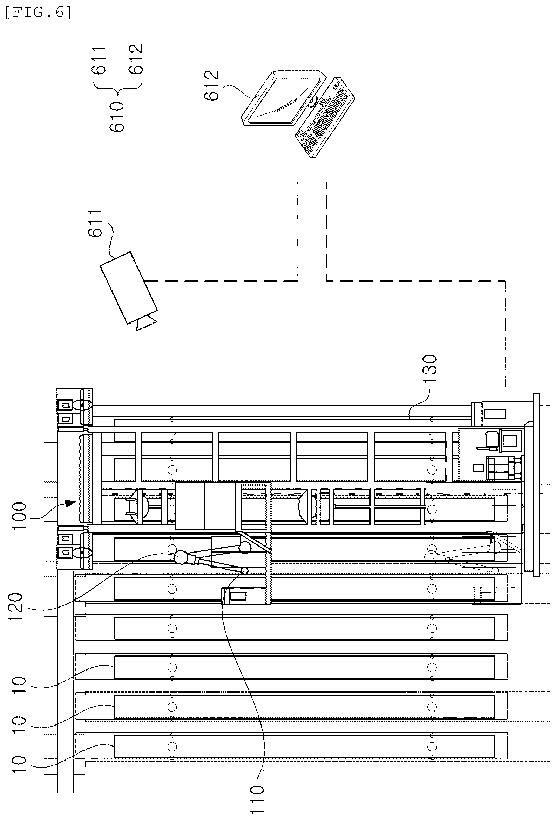

FIG. 6 is a diagram illustrating an entire system including a device for sealing a coke oven door according to an embodiment of the present disclosure.

Referring to FIG. 6, the entire system 60 may include a device 100 for sealing a coke oven door and a sensing unit 610.

The sensing unit 610 may include one or more sensors. For example, the sensing unit 610 may include one or more cameras 611 imaging a plurality of coke ovens 10.

The sensing unit 610 may further include a monitoring device 612. The monitoring device 612 may sense whether gas leakage occurs in the plurality of coke ovens based on images obtained by one or more cameras 611.

The sensing unit 610 may detect an operation target region in which gas leakage occurs among a plurality of sealing regions.

The sensing unit 610 and the device 100 for sealing a coke oven door may transmit and receive data mutually through wired and wireless communication.

For example, the sensing unit 610 may transmit information on the operation target region to the device 100 for sealing a coke oven door.

The device 100 for sealing a coke oven door may move the robot 120 to the operation target region based on the information on the operation target region received from the sensing unit 610.

Specifically, the moving unit 130 may move the robot 120 to the operation target region by moving the frame unit 131 in the horizontal direction and moving the support unit 132 in the vertical direction.

The device 100 for sealing a coke oven door may control the robot arm to move the nozzle along the edge of the oven door positioned within the operation target region after moving the robot 120 to the operation target region.

The nozzle may discharge the sealing material while moving along the edge of the oven door positioned within the operation target region.

Also, the device 100 for sealing a coke oven door may transmit an image obtained by a first camera disposed on an end of the robot arm or an image obtained by a second camera disposed at the base to the sensing unit 610.

In an embodiment of the present disclosure, the device 100 for sealing a coke oven door may identify whether a toxic gas leaks using a wide-area image including a facility exterior. The device 100 for sealing a coke oven door may obtain a wide-area image including a facility exterior using one or more wide-area image sensors. The one or more wide-area image sensors may sense, for example, the coke oven door.

Also, the device 100 for sealing a coke oven door may perform an operation of a gas film discharging a sealing material based on the result of identifying whether a toxic gas leaks.

Specifically, the device 100 for sealing a coke oven door may obtain narrow-area sensing information about a gas leak site in the facility based on light. Narrow-area sensing information may be obtained using one or more laser sensors provided in the device 100 for sealing a coke oven door.

One or more laser sensors may be provided in the robot 120 included in the device 100 for sealing a coke oven door. For example, one or more laser sensors may be installed at the tip of the robot arm 121.

The device 100 for sealing a coke oven door may identify a crack region as a line based on the narrow-area sensing information, and may perform an operation of sealing with a sealing material based on the position in which the crack region and the toxic gas leakage are identified. The device 100 for sealing a coke oven door may discharge the sealing material and may melt the sealing material to seal the position in which the gas leakage is sensed.

The device 100 for sealing a coke oven door may seal a crack region by generating a moving path for moving a dispenser discharging a sealing material along the crack region and by moving the dispenser along the generated move path and providing the sealing material to the dispenser. For example, the dispenser of the device 100 for sealing a coke oven door may be implemented as a portion of the nozzle 111.

The device 100 for sealing a coke oven door may sense whether additional toxic gas leaks when the supply of sealing material from the dispenser is stopped. The operating of sensing additional toxic gas leakage may be performed using one or more laser sensors or other sensors provided by the device 100 for sealing a coke oven door. The other sensor may be an image sensor or a laser sensor.

The device 100 for sealing a coke oven door may perform an operation of discharging a sealing material through a dispenser and sealing an opening until an opening from which toxic gas is leaked is not identified.

The device 100 for sealing a coke oven door may further include an air generator for exposing the opening from which toxic gas is leaked. The device 100 for sealing a coke oven door may blow air toward a region in which toxic gas is detected using the air generator and may detect the opening using one or more sensors.

The device 100 for sealing a coke oven door may adjust a distance between one or more sensors and the source of toxic gas to become closer when a crack region is not identified. For example, the device 100 for sealing a coke oven door may adjust the position of the robot arm 121 such that the robot arm 121 on which one or more sensors are installed may approach the facility.

The device 100 for sealing a coke oven door may determine whether a toxic gas leak is identified by applying the obtained wide-area image to the first machine learning model having been learned in advance. Also, the device 100 for sealing a coke oven door may determine at least one of whether to sense a crack region, position information of the crack region, and shape information by applying the obtained narrow-area sensing information to the second machine learning model having been learned in advance.

Also, in describing the present disclosure, '~ part' or 'unit' may be implemented in various manners, for example, by a processor, program instructions performed by a processor, a software module, a microcode, a computer program product, a logic circuit, an application-specific integrated circuit, firmware, or the like.

The description of the method disclosed in the embodiment of the present disclosure may be directly implemented by a hardware processor, or may be implemented and performed by a combination of hardware and software modules among the processors. The software module may be stored in a general storage medium such as a random access memory, a flash memory, a read-only memory, a programmable read-only memory, an electrically erasable programmable memory, a register, or the like. The storage medium may be positioned in the memory, and the processor may read the information stored in the memory and may complete the above-described method by combining the information with the hardware. To avoid overlap description, a detailed description may not be provided herein.

In the implementation process, each description of the above-described method may be completed by a hardware logic integrated circuit of a processor or an instruction in the form of software.

That is, those skilled in the art would understand that each exemplary unit and algorithm operation described in the embodiments disclosed in this specification may be implemented by combining electronic hardware or a combination of computer software and electronic hardware. Whether such a function is performed in a hardware manner or in a software manner may be determined by the specific application and design constraints of the technical solution. Those skilled in the art may implement the described functionality using different methods for each specific application, but such implementation should not be construed beyond the scope of the present disclosure.

In the several embodiments provided in the present disclosure, it should be understood that the disclosed devices and methods may be implemented in other manners. For example, the device embodiments described above are merely examples, for example, the division of the units is merely a kind of logical functional division, and in an actual implementation, other division methods may be present, for example, a plurality of units or assemblies may be combined or integrated into another system, or some features may be ignored or not performed. On the other hand, the coupling or direct coupling or communication connection between each other shown or discussed may be an indirect coupling or communication connection through some interface, device or unit, and may be in an electrical, mechanical or other form.

The units described as separated components above may be physically separated, and the components indicated as units may or may not be physical units, that is, may be positioned in one place or distributed over a plurality of network units. A portion or the entirety of the units may be selected according to actual demand to implement the purpose of the method of the present embodiment.

That is, each functional unit in each embodiment of the present disclosure may be integrated into one processing unit, each unit may be present alone, or two or more units may be integrated into one unit.

When the function is implemented in the form of a software functional unit and sold or used as an independent product, the function may be stored in one computer-readable storage medium. Based on this understanding, the technical solution of the present disclosure, which is essential or contributes to the prior art, or a portion of the technical solution, may be implemented in the form of a software product, and the computer software product may be stored in one storage medium and may include a small number of instructions to allow one computer device (which may be a personal computer, a server, or a network device, or the like) to perform the entirety or a portion of the operations of the method described in each embodiment of the present disclosure. The storage medium described above may include various media capable of storing program codes, such as a USB memory, a mobile hard disk, a read-only memory (ROM), a random access memory (RAM), a magnetic disk, or a CD-ROM.

The present disclosure may not be limited by the above-described embodiments and the accompanied drawings. The scope of the rights is intended to be limited by the attached claims, and it will be apparent to those skilled in the art that various substitutions, modifications, and changes may be made within the scope not departing from the technical idea of the present disclosure described in the claims.

## Claims

1. A device for sealing a coke oven door, the device comprising:
a sealing material supply unit including a nozzle discharging a sealing material;
a robot connected to the sealing material supply unit and including a robot arm moving a position of the nozzle and a base supporting the robot arm;
a moving unit moving the robot in a horizontal direction in which a plurality of coke ovens are arranged and a vertical direction which is a length direction of the plurality of coke ovens; and
a control unit controlling the robot arm,
wherein the control unit controls the robot arm such that the nozzle moves along an edge of an oven door of one of the plurality of coke ovens.

2. The device of claim 1, wherein the moving unit includes:
a frame unit moving in the horizontal direction;
a support unit supporting the base, connected to the frame unit, and moving in the vertical direction along a length direction of the frame unit; and
a sensing unit sensing positions of the frame unit and the support unit for the plurality of coke ovens.

3. The device of claim 2, wherein the sensing unit recognizes buckstays positioned on both sides of the oven door, and derives a position in the horizontal direction of the frame unit based on the number of buckstays recognized while the frame unit moves in the horizontal direction.

4. The device of claim 2,
wherein the plurality of coke ovens are divided into a plurality of sealing regions, and
wherein the moving unit moves the robot to an operation target region in which gas leakage occurs among the plurality of sealing regions by moving the frame unit in the horizontal direction and moving the support unit in the vertical direction.

5. The device of claim 4,
wherein the robot further includes a laser generator disposed on an end of the robot arm and generating a laser beam, and
wherein the control unit detects an edge of the oven door positioned within the operation target region based on shape information of the oven door pre-stored and a shape recognized by the laser beam.

6. The device of claim 5, wherein the control unit controls the robot arm to perform a sealing operation in which the nozzle moves along an edge of the oven door positioned within the operation target region and discharges the sealing material.

7. The device of claim 6,
wherein the robot further includes a first camera disposed on an end of the robot arm, and
wherein the control unit monitors a progress of the sealing operation based on an image obtained by the first camera.

8. The device of claim 6,
wherein the robot further includes a second camera disposed on the base, and
wherein the control unit monitors whether gas leakage occurs in the operation target region after the sealing operation is completed based on an image obtained by the second camera, and when it is determined that gas leakage occurs in the operation target region, a resealing operation for the operation target region is performed.

9. The device of claim 1,
wherein the sealing material supply unit further includes a supply line supplying the sealing material to the nozzle, and
wherein the robot arm supports the supply line.

10. A method for sealing a coke oven door, the method comprising:
an operation of moving a robot in a horizontal direction and a vertical direction;
an operation of moving a nozzle by controlling a robot arm included in the robot; and
an operation of discharging a sealing material from the nozzle,
wherein the operation of moving the nozzle includes controlling the robot arm such that the nozzle moves along an edge of an oven door of one of a plurality of coke ovens.

11. The method of claim 10, wherein the operation of moving the robot includes:
moving the robot in the horizontal direction in which a plurality of coke ovens are arranged; and
moving the robot in the vertical direction, which is the length direction of the plurality of coke ovens.

12. The method of claim 11, wherein the operation of moving the robot in the horizontal direction includes:
recognizing buckstays positioned on both sides of the oven door; and
deriving a position in the horizontal direction of the robot based on the number of backstays.

13. The method of claim 11,
wherein the plurality of coke ovens is divided into a plurality of sealing regions, and
wherein the operation of moving the robot includes moving the robot to an operation target region in which gas leakage occurs among the plurality of sealing regions.

14. The method of claim 13, wherein the operation of moving the nozzle includes:
recognizing a shape using a laser generator disposed on an end of the robot arm; and
detecting an edge of the oven door positioned within the operation target region based on pre-stored shape information of the oven door and the shape recognized by the laser generator.

15. The method of claim 14, further comprising:
obtaining a first image by a first camera disposed on an end of the robot arm; and
monitoring a progress of a sealing operation for the operation target region based on the first image.

16. The method of claim 15, further comprising:
an operation of obtaining a second image by a second camera disposed on a base supporting the robot arm; and
an operation of monitoring whether a gas leakage occurs in the operation target region after the sealing operation for the operation target region is completed based on the second image.

17. The method of claim 16, further comprising:
an operation of performing a resealing operation on the operation target region when it is determined that gas leakage occurs in the operation target region after the sealing operation on the operation target region is completed.

18. The method of claim 10, further comprising:
an operation of supplying the sealing material to the nozzle through a supply line supported by the robot arm.

19. A device for sealing a coke oven door, the device comprising:
a sensing unit including one or more sensors and sensing whether gas leakage occurs with respect to a plurality of coke ovens;
a sealing unit including a nozzle discharging a sealing material and a robot arm moving a position of the nozzle;
a moving unit moving the sealing unit in a horizontal direction and a vertical direction,
wherein the plurality of coke ovens are divided into a plurality of sealing regions,
wherein the sensing unit detects an operation target region in which gas leakage occurs among the plurality of sealing regions,
wherein the moving unit moves the sealing unit to the operation target region, and
wherein the sealing unit controls the robot arm such that the nozzle moves along an edge of an oven door positioned within the operation target region.

20. The device of claim 19,
wherein the sealing unit further includes a laser generator disposed on an end of the robot arm and generating a laser beam, and
wherein the sealing unit detects an edge of the oven door positioned within the operation target region based on pre-stored shape information of the oven door and a shape recognized by the laser beam.
